# EUROPÄISCHE PATENTANMELDUNG

(11) **EP 2 196 376 A2**
(43) Veröffentlichungstag der Anmeldung: **16.06.2010**
(21) Anmeldenummer: 09009361.8
(22) Anmeldetag: 18.07.2009
(51) Int. Cl.: B61D 47/00, B65G 63/00, B62D 65/02, G06Q 50/00, G06Q 10/00

(54) **Transport und Verteilungsverfahren für eine Montagelinie für Kraftfahrzeuge**

(30) Priorität: 13.12.2008 DE 102008062212
(71) Anmelder: Dr. Ing. h.c. F. Porsche AG, 70435 Stuttgart (DE)
(72) Erfinder: Meyer, Christian, 04435 Schkeuditz (DE); Müller, Lutz, 04425 Taucha (DE); Käuffelin, Pascal, 08428 Langenbernsdorf (DE); Schuster, Ralf, 04509 Wiedemar (DE)

(57) **Zusammenfassung**

Die Erfindung betrifft ein Verfahren für eine Montagelinie (1) für Kraftfahrzeuge (3), bei der vorgefertigte Einheiten (5) an aufeinanderfolgenden Montagestationen (4) nach und nach fertiggestellt werden, wobei die vorgefertigten Einheiten (5) losweise angeliefert, an einer Entladestation (9) vereinzelt und in einer definierten Reihenfolge in die Montagelinie (2) eingespeist werden. Um eine kontinuierliche Fertigung unabhängig vom Fertigungsaufwand der einzelnen Kraftfahrzeuge sicherzustellen, wird vorgeschlagen, dass für ein Los von vorgefertigten Einheiten (5) eine optimierte Montagereihenfolge bestimmt wird, die sich aus spezifischen Eigenschaftsmerkmalen der Kraftfahrzeuge (3) ergibt.

## Beschreibung

Die Erfindung betrifft ein Verfahren zur Steuerung einer Montagelinie für Kraftfahrzeuge gemäß dem Oberbegriff des Patentanspruchs 1.

Aus dem Serienfahrzeugbau ist es bekannt, dass vorgefertigte Einheiten, beispielsweise Rohkarossenteile, rechtzeitig und in der notwendigen Menge an der Fertigungsstraße für die Herstellung der Kraftfahrzeuge zur Verfügung gestellt werden. Darüber hinaus hat im Serienfahrzeugbau die sogenannte Just-in-Sequenz-Produktion Einzug gehalten, bei der die vorgefertigten Einheiten zusätzlich in der Reihenfolge angeliefert werden, in der sie auch verarbeitet werden.

Aus der DE 102 21 733 A1 ist ein Verfahren zur Herstellung von Kraftfahrzeugen bekannt, bei dem die angelieferten und vorgefertigten Einheiten Fahrzeugkarossen sind, die in einer geographisch entfernten Produktionsstätte bis zu einem definierten Herstellungsgrad gefertigt werden. Von dieser Produktionsstätte werden die vorgefertigten Einheiten in Bahnwaggons zum Fertigungsstandort transportiert. Hier erfolgt die Entladung aus den Bahnwaggons, die Vereinzelung der vorgefertigten Einheiten und das Einspeisen der Einheiten in die Fertigungslinie.

Die Reihenfolge, mit der die vorgefertigten Einheiten in die Fertigungslinie eingespeist werden, entspricht der Reihenfolge, in der die vorgefertigten Einheiten aus den Bahnwaggons entladen werden. Da jedes Kraftfahrzeug eine kundenseitig individuelle Ausstattung erhalten kann, sind individuelle Fertigungszeiten für jedes Fahrzeug zu kalkulieren. Je nach gewünschtem Motortyp, Getriebetyp oder Innenausstattung erhöht oder reduziert sich der Fertigungsaufwand pro Fahrzeug. Bei einem hohen Fertigungsaufwand, beispielsweise bei Fahrzeugen mit Sonderausstattung, kann es deshalb vorkommen, dass die Taktzeit an einer Montagestation überschritten wird.

Es besteht daher die Aufgabe der Erfindung darin, ein Verfahren zur Steuerung einer Fertigungslinie für Kraftfahrzeuge zu schaffen, mit dem eine kontinuierliche Fertigung unabhängig vom Fertigungsaufwand der einzelnen Kraftfahrzeuge sichergestellt werden kann.

Die Aufgabe wird erfindungsgemäß mit den Merkmalen des Patentanspruchs 1 gelöst.

Vorteilhafte Ausgestaltungen ergeben sich aus den Merkmalen der Unteransprüche.

Der Kern der Erfindung liegt darin, dass die Eigenschaftsmerkmale der zu fertigenden Kraftfahrzeuge für die Festlegung der Reihenfolge, in der die vorgefertigten Einheiten in die Fertigungslinie eingespeist werden, herangezogen werden. Unter Eigenschaftsmerkmalen sind im Sinne der Erfindung all die Umfänge eines Kraftfahrzeugs zu verstehen, die von einer Grundausstattung abweichen. Dazu gehören zum Beispiel Modellvarianten, Derivate, Motortypen, Getriebetypen, Sonderausstattungen u.ä. Die Eigenschaftsmerkmale werden vorab nach ihrem jeweiligen Fertigungsaufwand klassifiziert und in einem Computerprogramm, einem sogenannten Sequenzer, hinterlegt. Der Sequenzer ist in der Lage, aus den Eigenschaftsmerkmalen nach einem vorgegebenen Prinzip für eine Gruppe von Fahrzeugen eine Reihenfolge festzulegen. Hierzu wird auch die benötigte Fertigungszeit je Montagestation ausgewertet und mit berücksichtigt. So hat sich beispielsweise als ungünstig herausgestellt, zwei Fahrzeuge mit einem hohen Fertigungsaufwand unmittelbar hintereinander auf der Fertigungslinie zu fördern. Durch den Sequenzer können beispielsweise Fahrzeuge mit erhöhtem Fertigungsaufwand über eine Gruppe von Fahrzeugen gleichverteilt werden. Das hat den Vorteil, dass beispielsweise auf der Montagelinie nach einem Fahrzeug mit hohem Fertigungsaufwand ein Fahrzeug mit sehr geringem Fertigungsaufwand gefahren wird. Dabei kann dann das Fahrzeug an Montagestationen, an denen die Taktzeit überschritten wird, innerhalb der Taktzeit für das Folgefahrzeug noch nachgearbeitet werden. Ein Aufsummieren der überschrittenen Fertigungszeit über mehrere Montagestationen hinweg kann somit unterbunden werden. Ferner kann ein Mindestabstand zwischen Fahrzeugen mit identischen Eigenschaftsmerkmalen festgelegt werden, d.h. es wird festgelegt, wie viele andere Einheiten zwischen den beiden identischen Einheiten gefertigt werden sollen.

Vorteilhaft hat sich erwiesen, wenn die Einheiten mit einem erhöhten Fertigungsaufwand nach dem Prinzip der Gleichverteilung über das Los von Einheiten verteilt werden.

In einer bevorzugten Ausgestaltung des Verfahrens für die Montage von Kraftfahrzeugen können die vorgefertigten Einheiten Rohbaukarossen sein, die an einem anderen Produktionsstandort hergestellt und per Zug an die Entladestation der Montagelinie transportiert werden. In einem Zug können dann beispielsweise Rohbaukarossen für eine Tagesproduktion der Montagelinie transportiert werden.

Vorteilhafterweise kann das Los von vorgefertigten Einheiten, für die eine optimierte Montagereihenfolge festgelegt wird, der Inhalt eines Waggons sein. Die Daten zu den vorgefertigten Einheiten erhält das Computerprogramm von dem anderen Produktionsstandort. Jede vorgefertigte Einheit ist mit einem Code versehen, der beim Beladen ausgelesen wird. Das Computerprogramm legt somit die optimierte Montagereihenfolge aus den in dem Waggon zusammengefassten Einheiten fest.

Anschließend können die vorgefertigten Einheiten automatisch in der optimierten Montagereihenfolge aus ihrem Waggon entladen werden. Alternativ ist eine Entladung in Ladereihenfolge möglich, wobei anschließend die Rohkarossen beispielsweise in einer Sortierstation in ihre optimierte Montagereihenfolge gebracht werden müssen.

Für den Sequenzer werden von dem anderen Produktionsstandort Lieferdaten, wie Anzahl, Reihenfolge und Eigenschaftsmerkmale der Einheiten, an ein Computerprogramm datentechnisch übermittelt. Daraus kann der Sequenzer die optimierte Montagereihenfolge bestimmen. Denkbar ist auch, dass bei kleinen Losgrößen eine manuelle Überprüfung der berechneten Montagereihenfolge stattfindet. Alternativ zum Prinzip der Gleichverteilung ist es möglich, die Einheiten blockweise zusammenzustellen. Hierbei werden Fahrzeuge mit speziellen Eigenschaften, z.B. Vorserienfahrzeuge, Fahrzeuge vergangener Modelljahre bewusst nacheinander gefertigt.

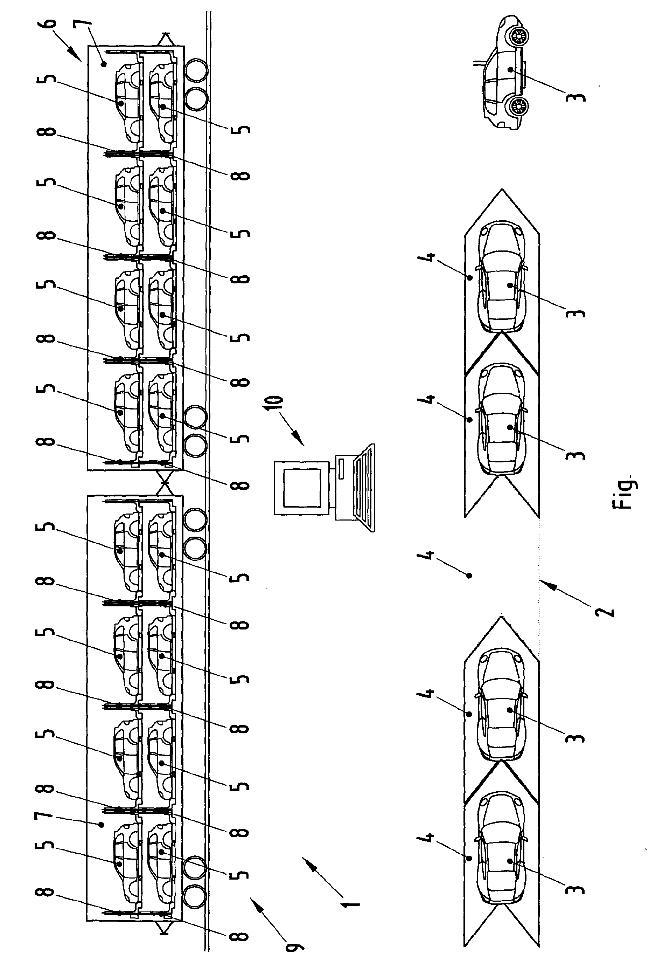

Eine bevorzugte Ausgestaltung der Erfindung wird im Folgenden anhand der einzigen Figur näher erläutert.

Die Figur zeigt eine Kraftfahrzeugmontage 1 mit einer Montagelinie 2 für Kraftfahrzeuge 3, bei der die zu fertigenden Kraftfahrzeuge 3 taktweise an aufeinanderfolgenden Montagestationen 4 nach und nach fertiggestellt werden.

Die Montagelinie 2 wird mit vorgefertigten Einheiten 5 versorgt, die von einem entfernten Produktionsstandort per Zug 6 angeliefert werden. Der Zug 6 transportiert vorgefertigte Einheiten für eine Tagesproduktion der Montagelinie 2 in mehreren Waggons 7. In jedem Waggon 7 sind in diesem Ausführungsbeispiel acht vorgefertigte Einheiten 5 auf Ladungsträgern 8 untergebracht.

Die vorgefertigten Einheiten 5 werden mit ihren Ladungsträgern 8 an einer Entladestation 9 einzeln aus ihrem Waggon 7 mit einem nicht dargestellten Ladewagen entnommen. Die Reihenfolge der vorgefertigten Einheiten 5 innerhalb des Waggons 7 ist unbestimmt.

Ein Sequenzer 10 erhält vorab die Lieferdaten für den Zug 6 vom entfernten Produktionsstandort. D.h., jede vorgefertigte Einheit 5 ist mit ihren spezifischen Eigenschaftsmerkmalen sowie mit ihrer genauen Position im Zug 6 identifizierbar. Der Sequenzer 10 stellt entsprechend der Eigenschaftsmerkmale der in einem Waggon 7 befindlichen Einheiten 5 für diesen Waggon 7 eine optimierte Montagereihenfolge zusammen. Nach dieser optimierten Montagereihenfolge werden die vorgefertigten Einheiten 5 an der Entladestation 9 vereinzelt und in die Montagelinie 2 eingespeist.

Es ist jedoch auch denkbar, die Gruppe von vorgefertigten Einheiten, für die der Sequenzer eine optimierte Montagereihenfolge bestimmt, nicht nur auf einen Waggon zu beschränken. So kann der Sequenzer auch für den gesamten Zug 6 eine optimierte Montagereihenfolge festlegen. Die entladenen Einheiten 5 müssten dann gegebenenfalls in einer Sortierstation entsprechend sortiert werden.

Ferner ist denkbar, den Sequenzer bereits bei der Bestellung der Einheiten eine optimierte Montagereihenfolge festlegen zu lassen, so dass die Einheiten innerhalb der Waggons bereits in der richtigen Reihenfolge angeliefert werden können.

## Patentansprüche

1. Verfahren für eine Montagelinie (2) für Kraftfahrzeuge (3), bei der vorgefertigte Einheiten (5) an aufeinanderfolgenden Montagestationen (4) nach und nach fertiggestellt werden, wobei die vorgefertigten Einheiten (5) losweise angeliefert, an einer Entladestation (9) vereinzelt und in einer definierten Reihenfolge in die Montagelinie (2) eingespeist werden,
**dadurch gekennzeichnet,**
**dass** für ein Los von vorgefertigten Einheiten (5) eine optimierte Montagereihenfolge bestimmt wird, die sich aus spezifischen Eigenschaftsmerkmalen der Kraftfahrzeuge (3) ergibt.

2. Verfahren nach Anspruch 1,
**dadurch gekennzeichnet,**
**dass** der sich aus den Eigenschaftsmerkmalen ergebende Fertigungsaufwand klassifiziert und bei der Bestimmung der Montagereihenfolge berücksichtigt wird.

3. Verfahren für eine Montagelinie nach Anspruch 2,
**dadurch gekennzeichnet,**
**dass** die Einheiten (5) mit einem erhöhten Fertigungsaufwand über das Los von Einheiten (5) gleichverteilt werden.

4. Verfahren für eine Montagelinie nach einem der vorgenannten Ansprüche,
**dadurch gekennzeichnet,**
**dass** die vorgefertigten Einheiten (5) Rohbaukarossen sind, die an einem anderen Produktionsstandort hergestellt und per Zug (6) an die Entladestation (9) der Montagelinie (2) transportiert werden.

5. Verfahren für eine Montagelinie nach Anspruch 4,
**dadurch gekennzeichnet,**
**dass** das Los von Einheiten (5) in einem Waggon (7) transportiert werden.

6. Verfahren für eine Montagelinie nach Anspruch 5,
**dadurch gekennzeichnet,**
**dass** die vorgefertigten Einheiten (5) in der Montagereihenfolge aus ihrem Waggon (7) entladen werden.

7. Verfahren für eine Montagelinie nach einem der Ansprüche 4 bis 6,
**dadurch gekennzeichnet,**
**dass** von dem anderen Produktionsstandort Lieferdaten, wie Anzahl, Reihenfolge und Eigenschaftsmerkmale der Einheiten (5), an ein Computerprogrammprodukt datentechnisch übermittelt werden.

8. Montagelinie zur Ausführung des Verfahrens nach einem der vorgenannten Ansprüche.

9. Computerprogrammprodukt umfassend Programmcode-Mittel zur Ausführung aller Schritte des Verfahrens nach Ansprüchen 1 bis 7, wenn das Computerprogramm auf einem Rechner durchgeführt wird.
